# EUROPEAN PATENT APPLICATION

(11) **EP 4 765 678 A1**
(43) Date of publication of application: **24.06.2026**
(21) Application number: 24903965.2
(22) Date of filing: 31.10.2024
(51) Int. Cl.: H04B 10/114, H04B 10/50, H04B 10/564, H01M 10/42, H02J 7/00

(54) **BATTERY MANAGEMENT DEVICE**

(30) Priority: 13.12.2023 KR 20230180526
(71) Applicant: LG Energy Solution, Ltd., Seoul 07335 (KR)
(72) Inventor: KIM, Young Beom, Daejeon 34122 (KR)
(74) Representative: Plasseraud IP
(86) International application number: PCT/KR2024/016945
(87) International publication number: WO 2025/127398

(57) **Abstract**

A battery management apparatus according to an embodiment disclosed herein includes an optical signal generation unit configured to generate an optical signal for performing optical communication with another battery management apparatus based on a preset operating voltage applied from outside, a driving unit including a plurality of resistor units, each of which includes a resistor and a switch electrically connected to the resistor, the plurality of resistor units being selectively connected to the optical signal generation unit, and a control unit configured to control an operation of the plurality of switches to control selective connection between the optical signal generation unit and the plurality of resistor units.

## Description

### TECHNICAL FIELD

### CROSS-REFERENCE TO RELATED APPLICATION

This application claims priority to and the benefit of Korean Patent Application No. 10-2023-0180526 filed in the Korean Intellectual Property Office on December 13, 2023, the entire content of which is incorporated herein by reference.

### TECHNICAL FIELD

An embodiment disclosed herein relates to a battery management apparatus.

### BACKGROUND ART

Recently, research and development of secondary batteries have been actively performed. Herein, the secondary batteries, which are chargeable/dischargeable batteries, may include all of conventional nickel (Ni)/cadmium (Cd) batteries, Ni/metal hydride (MH) batteries, etc., and recent lithium-ion batteries. Among the secondary batteries, a lithium-ion battery has a much higher energy density than those of conventional Ni/Cd batteries, Ni/MH batteries, etc. Moreover, the lithium-ion battery may be manufactured to be small and lightweight, such that the lithium-ion battery has been used as a power source of mobile devices, and recently, a use range thereof has been extended to power sources for electric vehicles, attracting attention as next-generation energy storage media.

Such a secondary battery is produced in the unit of a battery module including a plurality of battery cells and a battery pack including a plurality of battery modules. A plurality of battery management apparatuses included in a battery pack communicate with another battery management apparatus to transmit and receive information related to a state of a battery. The battery management apparatus may communicate with another battery management apparatus wiredly or wirelessly, and when performing wireless communication, especially, optical communication, has a difficulty in precisely adjusting a strength of an optical signal.

### DISCLOSURE

### TECHNICAL PROBLEM

Embodiments disclosed herein aim to provide a battery management apparatus capable of adjusting a strength of an optical signal.

Technical problems of the embodiments disclosed herein are not limited to the aforementioned technical problems, and other unmentioned technical problems would be clearly understood by those of ordinary skill in the art from the following description.

### TECHNICAL SOLUTION

A battery management apparatus according to an embodiment disclosed herein includes an optical signal generation unit configured to generate an optical signal for performing optical communication with another battery management apparatus based on a preset operating voltage applied from outside, a driving unit including a plurality of resistor units, each of which includes a resistor and a switch electrically connected to the resistor, the plurality of resistor units being selectively connected to the optical signal generation unit, and a control unit configured to control an operation of the plurality of switches to control selective connection between the optical signal generation unit and the plurality of resistor units.

According to an embodiment, the optical signal generation unit may include a light-emitting diode including an anode terminal through which the operating voltage is applied and a cathode terminal electrically connected to an end of the driving unit, and the other end of the driving unit may be electrically connected to a ground terminal.

According to an embodiment, the driving unit may include a first reference resistor and a plurality of first resistor units connected in parallel to the first reference resistor, and each of the plurality of first resistor units may include an adjustment resistor and a switch connected in series to the adjustment resistor.

According to an embodiment, an end of the first reference resistor and an end of a switch included in each of the plurality of first resistor units may be electrically connected to the cathode terminal, an end of each adjustment resistor included in each of the plurality of first resistor units may be electrically connected to the other end of each switch, and the other end of the first reference resistor and the other end of each adjustment resistor included in each of the plurality of first resistor units may be electrically connected to the ground terminal.

According to an embodiment, a maximum value of a magnitude of an equivalent resistance of the driving unit may correspond to a value of the first reference resistor.

According to an embodiment, magnitudes of adjustment resistors included in each of the plurality of first resistor units may be different from each other.

According to an embodiment, the driving unit may include a second reference resistor and a plurality of second resistor units connected in series to the second reference resistor, and each of the plurality of second resistor units may include an adjustment resistor and a switch connected in parallel to the adjustment resistor.

According to an embodiment, the adjustment resistors included in each of the plurality of second resistor units may be connected in series, and an end of each switch may be connected in parallel to the second reference resistor, the adjustment resistor, and each terminal connecting each adjustment resistor, and the other end of each switch may be electrically connected to the ground terminal.

According to an embodiment, a minimum value of the magnitude of the equivalent resistance of the driving unit may correspond to a value of the second reference resistor.

According to an embodiment, magnitudes of adjustment resistors included in each of the plurality of second resistor units may be different from each other.

According to an embodiment, the driving unit may include a reference resistor unit and a plurality of adjustment resistor units connected in parallel to the reference resistor, and each of the reference resistor unit and the plurality of adjustment resistor units may include a third reference resistor, a plurality of adjustment resistors connected in series to the third reference resistor, and a plurality of switches connected in parallel to each of the plurality of adjustment resistors.

According to an embodiment, each of the third reference resistor and the plurality of adjustment resistors included in each of the reference resistor unit and the plurality of adjustment resistor units may be connected in series, and an end of each switch may be connected in parallel to the third reference resistor, the adjustment resistor, and a terminal connecting each adjustment resistor, and the other end of each switch may be electrically connected to the ground terminal.

According to an embodiment, the driving unit may include a fourth resistor unit including a fourth reference resistor having an end electrically connected to a first node that is the cathode terminal, a plurality of switches, each having an end electrically connected to the first node, and a plurality of fourth adjustment resistors connected in series to the other end of each of the plurality of switches and a fifth resistor unit including a fifth reference resistor connected in series to a second node corresponding to the other ends of the fourth reference resistor and the plurality of adjustment resistors, a plurality of fifth adjustment resistors connected in series to the fifth reference resistor, and a plurality of switches respectively connected among the second node, a terminal among the plurality of fifth adjustment resistors, and the ground terminal.

A battery management apparatus according to an embodiment disclosed herein includes an optical signal generation unit configured to generate an optical signal for performing optical communication with another battery management apparatus based on a preset operating voltage applied from outside, a driving unit including a plurality of resistors and a plurality of switches electrically connected respectively to the plurality of resistors, and a control unit configured to control operations of the plurality of switches such that a magnitude of current flowing through the driving unit reaches a magnitude of target current.

According to an embodiment, the optical signal generation unit may include a light-emitting diode including an anode terminal through which the operating voltage is applied and a cathode terminal electrically connected to an end of the driving unit.

According to an embodiment, the control unit may be further configured to increase the magnitude of the target current when communication is not performed based on the other battery management apparatus and the optical signal.

According to an embodiment, the control unit may be further configured to increase the magnitude of the target current based on data related to a magnitude of received current flowing through the other battery management apparatus.

### ADVANTAGEOUS EFFECTS

According to embodiments disclosed herein, there is provided a battery management apparatus capable of adjusting a strength of an optical signal.

The effects according to an embodiment disclosed in the present document are not limited to the effects mentioned above, and other effects not mentioned will be clearly understood by those of ordinary skill in the art according to the disclosure of the present document.

### DESCRIPTION OF DRAWINGS

FIG. 1 is a view for a battery management apparatus according to an embodiment disclosed herein.
FIG. 2 is a view for describing a process of performing optical communication according to an embodiment disclosed herein.
FIG. 3 is a view for describing a process of generating an optical signal according to an embodiment disclosed herein.
FIG. 4 is a view for describing a driving unit according to an embodiment disclosed herein.
FIG. 5 is a view for describing a driving unit according to another embodiment disclosed herein.
FIGS. 6A and 6B are views for describing a driving unit according to another embodiment disclosed herein.
FIGS. 7A and 7B are views for describing a driving unit according to another embodiment disclosed herein.

### MODE FOR INVENTION

Hereinafter, embodiments disclosed herein will be described in detail through exemplary drawings. In adding reference numerals to components of each drawing, it should be noted that the same components have the same numerals as much as possible even though they are displayed on different drawings. Moreover, in describing the embodiments disclosed herein, when it is determined that a detailed description of a related known configuration or function interferes with understanding of the embodiment disclosed herein, the detailed description thereof will be omitted.

To describe a component of an embodiment disclosed herein, terms such as first, second, A, B, (a), (b), etc., may be used. These terms are used merely for distinguishing one component from another component and do not limit the component to the essence, sequence, order, etc., of the component. The terms used herein, including technical and scientific terms, have the same meanings as terms that are generally understood by those skilled in the art, as long as the terms are not differently defined. The terms defined in a generally used dictionary should be interpreted as having the same meanings as the contextual meanings of the relevant technology and should not be interpreted as having ideal or exaggerated meanings unless they are clearly defined in the present application.

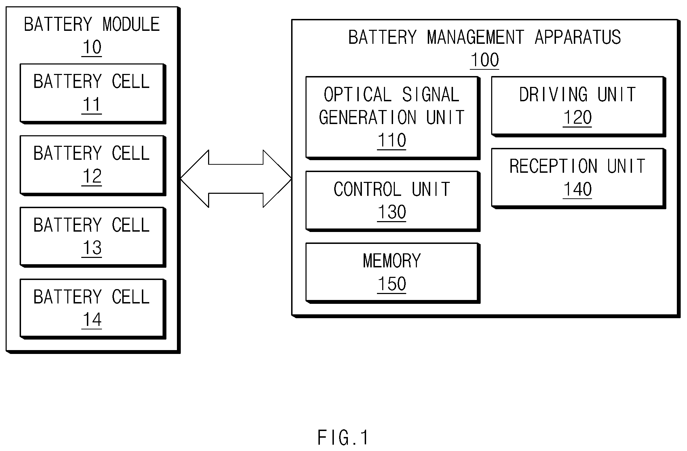

FIG. 1 is a view for a battery management apparatus according to an embodiment disclosed herein.

A battery module 10 may include a plurality of battery cells 11, 12, 13, and 14. Although the plurality of battery cells are illustrated as four in FIG. 1, the present disclosure is not limited thereto, and the battery module 10 may include n battery cells (n is a natural number of at least 2).

The plurality of battery cells 11, 12, 13, and 14 may be a lithium ion (Li-ion) battery, an Li-ion polymer battery, a nickel-cadmium (Ni-Cd) battery, a nickel hydrogen (Ni-MH) battery, etc., and are not limited thereto. Meanwhile, although one battery module 10 is illustrated in FIG. 1, the battery module 10 may be configured in plural according to an embodiment.

The battery module 10 may supply power to a target device (not shown). To this end, the battery module 10 may be electrically connected to the target device. Herein, the target device may include an electrical, electronic, or mechanical device that operates by receiving power from a battery system 1 including the plurality of battery cells 11, 12, and 13, and for example, the target device may be, but not limited to, a two-wheel electric vehicle such as an electric vehicle (EV), an electric scooter, etc.

The battery management apparatus 100 may manage and/or control a state and/or an operation of the battery module 10. For example, the battery management apparatus 100 may manage and/or control the states and/or operations of the plurality of battery cells 11, 12, 13, and 14 included in the battery module 10 or manage charging and/or discharging of the battery module 10. Herein, the battery management apparatus 100 may be, but not limited to, a battery module BMS or a battery pack BMS.

According to an embodiment, the battery management apparatus 100 may include an optical signal generation unit 110, a driving unit 120, a control unit 130, a reception unit 140, and a memory 150.

The optical signal generation unit 110 may generate an optical signal for performing optical communication with an external device. Herein, the optical signal may include data related to a state of the battery module 10 and/or each of the plurality of battery cells 11, 12, 13, and 14 included in the battery module 10. For example, the optical signal may include, but not limited to, data related to voltage, current, and/or temperature, etc., of the battery module 10 and/or each of the plurality of battery cells 11, 12, 13, and 14 included in the battery module 10.

According to an embodiment, the external device may include another battery management apparatus. For example, the optical signal may be provided to the other battery management apparatus than the battery management apparatus 100, and the other battery management apparatus may receive the state of the battery module 10 and/or each of the plurality of battery cells 11, 12, 13, and 14 included in the battery module 10.

According to an embodiment, the optical signal generation unit 110 may include, but not limited to, a light-emitting diode for generating an optical signal.

The driving unit 120 may be configured to adjust a strength of the optical signal generated by the optical signal generation unit 110. According to an embodiment, the driving unit 120 may include at least one resistor units, each of which includes a resistor and a switch connected to the resistor.

According to an embodiment, the driving unit 120 may include a reference resistor and at least one resistor units connected in parallel and/or in series to the reference resistor. Herein, one resistor unit may include a resistor and a switch connected in series or in parallel to the resistor. That is, one resistor unit may include a resistor and a switch connected in series to the resistor or a resistor and a switch connected in parallel to the resistor.

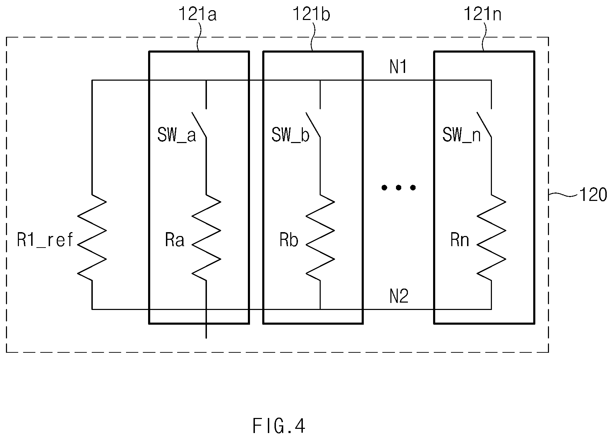

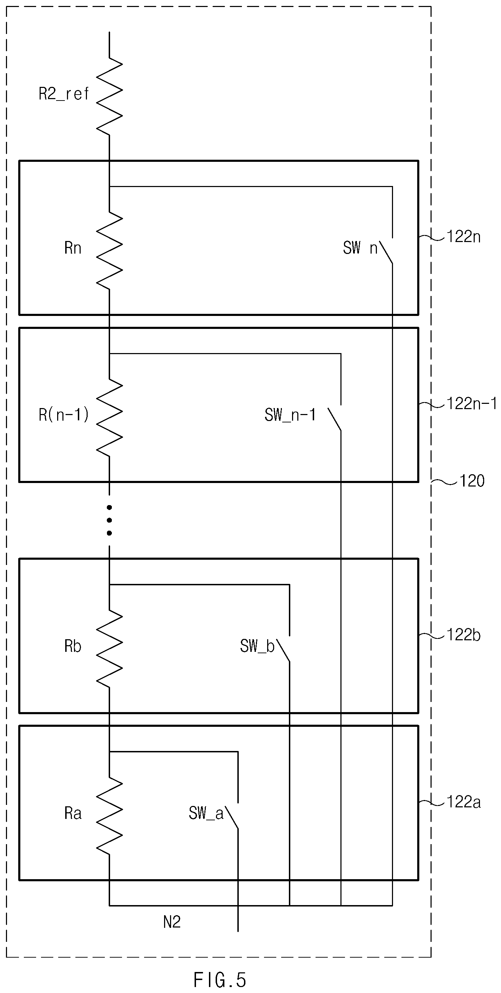

According to an embodiment, the reference resistor may be a resistor having a maximum value or a minimum value of an equivalent resistance of the driving unit. A matter related thereto will be described in a description of FIGS. 4 and 5.

The control unit 130 may control overall operations of the battery management apparatus 100. The control unit 130 may control selective connection of a switch of at least one resistor unit included in the driving unit 120 to adjust the strength of the optical signal generated by the optical signal generation unit 110. That is, the control unit 130 may control a magnitude of the equivalent resistance of the driving unit 120 by controlling selective connection of the switch of the at least one resistor unit included in the driving unit 120.

According to an embodiment, the control unit 130 may be implemented as at least one processor that executes software to control at least one another component (e.g., hardware or software) of the battery management apparatus 100 or perform an operation of processing and/or computing various data, etc.

The reception unit 140 may receive an optical signal received from the outside. According to an embodiment, the reception unit 140 may include a photo-diode (not shown) that detects an optical signal, and the photo-diode may convert the received optical signal into an electric signal.

The memory 150 may store various data generated and/or stored by the battery management apparatus 100. According to an embodiment, the memory 150 may store data related to the strength of the optical signal and the magnitude of the equivalent resistance corresponding to the strength of the optical signal.

According to an embodiment, the memory 150 may include a volatile memory device such as static random access memory (SRAM) or dynamic random access memory (DRAM) and a non-volatile memory device such as read only memory (ROM), programable ROM (PROM), and flash memory.

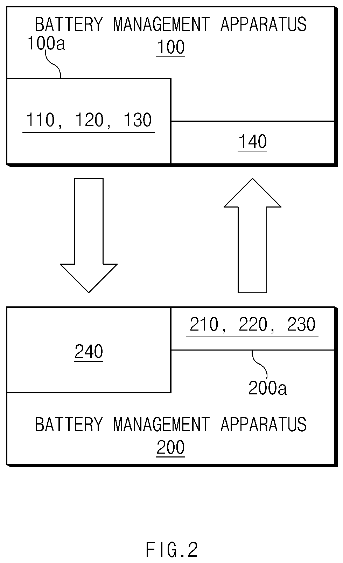

FIG. 2 is a view for describing a process of performing optical communication according to an embodiment disclosed herein.

Referring to FIG. 2, the battery management apparatus 100 may communicate with another battery management apparatus 200 based on a wired and/or wireless communication scheme.

According to an embodiment, the battery management apparatus 100 may communicate with the outside based on an optical communication scheme. Herein, optical communication, which is a sort of a wireless communication scheme among various wired and/or wireless communication schemes, may be a scheme to transmit data remotely by using an optical signal and/or perform communication between electronic devices, and the optical communication scheme may be performed between the optical signal generation unit that generates and/or transmits the optical signal and an optical signal reception unit that receives the transmitted optical signal. The optical signal may include, but not limited to, visible light, infrared light, ultraviolet light, etc., divided based on a wavelength of the optical signal.

According to an embodiment, the optical signal generation unit 110, the driving unit 120, and the control unit 130 of the battery management apparatus 100 may constitute one transmission unit 100a, and an optical signal generation unit 210, a driving unit 220, and a control unit 230 of a battery management apparatus 200 may constitute one transmission unit 200a, but the present disclosure is not limited thereto.

According to an embodiment a reception unit 240 of the battery management apparatus 200 may be arranged to correspond to the transmission unit 100a of the battery management apparatus 100, and the reception unit 140 of the battery management apparatus 100 may be arranged to correspond to the transmission unit 200a of the battery management apparatus 200, but an embodiment disclosed herein is not limited to this example, any arrangement may be possible as long as the optical signal may be transmitted and received between the transmission units 100a and 200a and the reception units 140 and 240.

According to an embodiment, the reception units 140 and 240 may detect an optical signal and convert the optical signal into an electric signal. For example, the reception unit 240 may detect an optical signal transmitted by the battery management apparatus 100 and convert the received optical signal into an electric signal, e.g., reception current.

According to an embodiment, the reception current flowing through the reception units 140 and 240 may be related to the strength of the optical signal. For example, the magnitude of the reception signal flowing through the reception unit 240 may increase as the strength of the optical signal transmitted by the battery management apparatus 100 increases, the magnitude of the reception current flowing through the reception unit 240 may decrease as the strength of the optical signal transmitted by the battery management apparatus 100 decreases, and the reception current may not flow through the reception unit 240 when optical communication is not performed between the battery management apparatus 100 and the battery management apparatus 200.

The battery management apparatus 100 and the battery management apparatus 200 may communicate with each other in an optical communication manner, thereby providing information related to an optical communication state to a different battery management apparatus. According to an embodiment, the battery management apparatus 100 may provide data related to the magnitude of the reception current generated based on the optical signal transmitted by the battery management apparatus 200 to the battery management apparatus 200 which may then provide data related to the magnitude of the reception current generated based on the optical signal transmitted by the battery management apparatus 100 to the battery management apparatus 100.

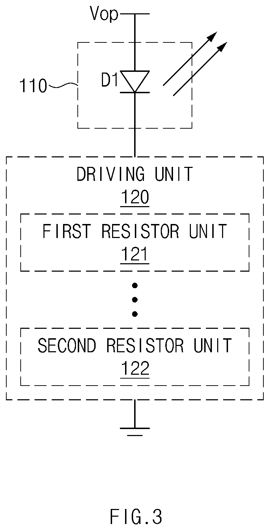

FIG. 3 is a view for describing a process of generating an optical signal according to an embodiment disclosed herein.

Referring to FIG. 3, a connection relationship between the optical signal generation unit 110 and the driving unit 120 is shown.

The optical signal generation unit 110 may include a photo-diode D1 that generates an optical signal. Referring to FIG. 3, the optical signal generation unit 110 is illustrated as including one photo-diode D1, but an embodiment disclosed herein is not limited to such an example.

According to an embodiment, the optical signal generation unit 110 may operate based on an operating power Vop applied from the outside. Herein, the operating power Vop may be supplied through an anode terminal of the photo-diode D1 included in the optical signal generation unit 110, and the magnitude of the operating power Vop may be set to have a preset constant reference level.

According to an embodiment, a cathode terminal of the photo-diode D1 included in the optical signal generation unit 110 may be electrically connected to one end of the driving unit 120, and the other end of the driving unit 120 may be electrically connected to a ground terminal.

According to an embodiment, the driving unit 120 may include at least one first resistor unit 121 and/or at least one second resistor unit 122. Matters related to the first resistor unit 121 and the second resistor unit 122 will be described in detail with reference to FIGS. 4 and 5.

The strength of the optical signal generated by the optical signal generation unit 110 may be related to a magnitude of diode current flowing through the photo-diode D1. For example, the strength of the optical signal generated by the optical signal generation unit 110 may increase when the magnitude of current flowing through the photo-diode D1 increases, and the strength of the optical signal generated by the optical signal generation unit 110 may decrease when the magnitude of current flowing through the photo-diode D1 decreases.

As described above, as the magnitude of the operating voltage Vop may be set to have a specific level, the diode current flowing through the photo-diode D1 may be related to the magnitude of the equivalent resistance of the driving unit 120 due to at least one first resistor unit 121 and/or second resistor unit 122 included in the driving unit 120. For example, the magnitude of the diode current flowing through the photo-diode D1 may decrease as the magnitude of the equivalent resistance of the driving unit 120 increases, and the magnitude of the diode current flowing through the photo-diode D1 may increase as the magnitude of the equivalent resistance of the driving unit 120 decreases. Thus, when the magnitude of the equivalent resistance of the driving unit 120 is controlled, the magnitude of the current flowing through the photo-diode D1 may be controlled, and thus the strength of the optical signal may be changed based on the magnitude of the equivalent resistance of the driving unit 120.

The control unit 130 (see FIG. 1) may control the driving unit 120 to change the magnitude of the current flowing through the photo-diode D1. According to an embodiment, the control unit 130 may control the driving unit 120 such that the magnitude of the current flowing through the photo-diode D1 corresponds to a magnitude of target current in which the target current may correspond to a threshold value of current that needs to flow through the photo-diode D1 to facilitate optical communication.

For example, as described in the detailed description of FIG. 2, when the magnitude of reception current flowing through the reception unit 240 included in the battery management apparatus 200 (see FIG. 2) decreases, the strength of the optical signal transmitted by the battery management apparatus 100 may decrease for various reasons. The control unit 130 included in the battery management apparatus 100 may increase the magnitude of the target current that needs to flow through the photo-diode D1 based on data related to the magnitude of the reception current received from the battery management apparatus 200.

According to an embodiment, the control unit 130 may control the driving unit 120 such that the target current flows through the photo-diode D1. For example, the control unit 130 may control electric connection of a plurality of switches (not shown) included in the driving unit 120 to adjust the magnitude of the equivalent resistance of the driving unit 120.

According to an embodiment, the control unit 130 may control at least one resistor unit included in the driving unit 120 to open and/or short-circuit a switch included in each of the at least one resistor unit. Herein, the control unit 130 may control the driving unit 120 to sequentially increase the strength of the optical signal.

According to an embodiment, the control unit 130 may calculate a magnitude of an equivalent resistance corresponding to a strength of an optical signal and control electric connection of the switch included in the at least one resistor unit such that the driving unit 120 has the computed magnitude of the equivalent resistance.

According to an embodiment, the control unit 130 may increase the magnitude of the target current when the reception current does not flow through the battery management apparatus 200. For example, based on data regarding the magnitude of the reception current received from the battery management apparatus 200, when a state where the reception current does not flow through the battery management apparatus 200, i.e., a state where optical communication is not performed is determined, the control unit 130 may control the driving unit 120 such that the magnitude of the current flowing through the photo-diode D1 corresponds to the magnitude of the target current. Herein, the control unit 130 may sequentially increase the magnitude of the target current to control the driving unit 120 such that the magnitude of the current flowing through the photo-diode D1 sequentially increases. When the current corresponding to the magnitude of the target current flows through the photo-diode D1, the control unit 130 may diagnose the optical communication state based on data regarding the magnitude of the reception current received from the battery management apparatus 200. That is, based on the data regarding the magnitude of the reception current received from the battery management apparatus 200, the control unit 130 may sequentially increase the magnitude of the target current until the reception current flows through the battery management apparatus 200.

According to an embodiment, the control unit 130 may adjust the equivalent resistance of the driving unit 120 based on the data regarding the magnitude of the reception current provided by the battery management apparatus 200 at preset intervals. For example, the control unit 130 may obtain the magnitude of the reception current flowing through the battery management apparatus 200 based on data received at preset intervals, and increase the magnitude of the target current, which is a threshold value of the current that needs to flow through the photo-diode D1.

FIG. 4 is a view for describing a driving unit according to an embodiment disclosed herein.

According to an embodiment, the driving unit 120 may include a first reference resistor R1_ref and a plurality of first resistor units 121a, 121b, and 121n connected in parallel to the first reference resistor R1_ref. While the driving unit 120 is illustrated as n first resistor units (n is an integer of at least 2) in FIG. 4, the present disclosure is not limited to this example.

According to an embodiment, each of the plurality of first resistor units 121a, 121b, and 121n may include an adjustment resistor and a switch connected in series to the adjustment resistor. For example, the first resistor unit 121a may include an adjustment resistor Ra and a switch SW_a connected in series to the adjustment resistor Ra, the first resistor unit 121b may include an adjustment resistor Rb and a switch SW_b connected in series to the adjustment resistor Rb, and the first resistor unit 121n may include an adjustment resistor Rn and a switch SW_n connected in series to the adjustment resistor Rn.

According to an embodiment, an end of the first reference resistor R1_ref may be connected to ends of a plurality of switches SW_a, SW_b, and SW_n included in each of the plurality of first resistor units 121a, 121b, and 121n, through a first node N1. Herein, the first node N1 may be electrically connected to a cathode terminal of the photo-diode D1 (see FIG. 3).

According to an embodiment, the other ends of the plurality of switches SW_a, SW_b, and SW_n included in each of the plurality of first resistor units 121a, 121b, and 121n may be electrically connected to one ends of the plurality of adjustment resistors Ra, Rb, and Rc included in each of the plurality of first resistor units 121a, 121b, and 121n. For example, the other end of the switch SW_a included in the first resistor unit 121a may be electrically connected to one end of the adjustment resistor Ra included in the first resistor unit 121a, the other end of the switch SW_b included in the first resistor unit 121b may be electrically connected to one end of the adjustment resistor Rb included in the first resistor unit 121b, and the other end of the switch SW_n included in the first resistor unit 121n may be electrically connected to one end of the adjustment resistor Rn included in the first resistor unit 121n.

According to an embodiment, the other end of the first reference resistor R1_ref may be electrically connected to the other end of each of the plurality of adjustment resistors Ra, Rb, and Rn included in each of the plurality of first resistor units 121a, 121b, and 121n, through a second node N2. Herein, the second node N2 may be electrically connected to the ground terminal shown in FIG. 3.

According to an embodiment, the magnitude of the equivalent resistance of the driving unit 120 may be determined based on connection states of the plurality of switches SW_a, SW_b, and SW_n included in each of the plurality of first resistor units 121a, 121b, and 121n. For example, the equivalent resistance of the driving unit 120 may correspond to the first reference resistance R1_ref when the plurality of switches SW_a, SW_b, and SW_n are all open, the equivalent resistance of the driving unit 120 may correspond to (R1_ref ∥ Ra) when among the plurality of switches SW_a, SW_b, and SW_n, the switch SW_a is in a short-circuit state and the switches SW_b and SW_n are open, and the equivalent resistance of the driving unit 120 may correspond to (R1_ref ∥ Ra ∥ Rb) when among the plurality of switches SW_a, SW_b, and SW_n, the switches SW_a and SW_b are in the short-circuit state and the switch SW_n is open, and the equivalent resistance may correspond to (R1_ref ∥ Ra ∥ Rb ∥ Rn) when the plurality of switches SW_a, SW_b, and SW_n are all in the short-circuit state.

According to an embodiment, the magnitude of the first reference resistance R1_ref may correspond to a maximum value of the magnitude of the equivalent resistance of the driving unit 120. This is because when the plurality of switches SW_a, SW_b, and SW_n enter the short-circuit state, the magnitude of the equivalent resistance of the driving unit 120 may decrease.

According to an embodiment, the control unit 130 (see FIG. 1) may control electric connection of the plurality of switches SW_a, SW_b, and SW_n in the open state to reduce the magnitude of the equivalent resistance of the driving unit 120, thereby increasing the magnitude of the current flowing through the photo-diode D1 (see FIG. 3). In other words, the control unit 130 may short-circuit the plurality of switches SW_a, SW_b, and SW_n in the open state to reduce the magnitude of the equivalent resistance of the driving unit 120, thereby increasing the strength of the optical signal generated by the optical signal generation unit 110 (see FIG. 1).

According to an embodiment, the magnitudes of the plurality of adjustment resistors Ra, Rb, and Rn included in each of the plurality of first resistor units 121a, 121b, and 121n may be equal to or different from each other.

FIG. 5 is a view for describing a driving unit according to another embodiment disclosed herein.

According to an embodiment, the driving unit 120 may include a second reference resistor R2_ref and a plurality of second resistor units 122a, 122b, and 122n connected in parallel to the second reference resistor R2_ref. While the driving unit 120 is illustrated as n second resistor units (n is an integer of at least 2) in FIG. 5, the present disclosure is not limited to this example.

According to an embodiment, each of the plurality of second resistor units 122a, 122b, and 122n may include an adjustment resistor and a switch connected in parallel to the adjustment resistor. For example, the second resistor unit 122a may include an adjustment resistor Ra and a switch SW_a connected in parallel to the adjustment resistor Ra, the second resistor unit 122b may include an adjustment resistor Rb and a switch SW_b connected in parallel to the adjustment resistor Rb, and the second resistor unit 122n may include an adjustment resistor Rn and a switch SW_n connected in parallel to the adjustment resistor Rn.

According to an embodiment, an end of the second reference resistor R2_ref may be electrically connected to a cathode terminal of the photo-diode D1 (see FIG. 3).

According to an embodiment, the other end of the second reference resistor R2_ref may be electrically connected to an end of the second resistor 122n among the plurality of second resistor units 122a, 122b, and 122n. That is, the other end of the second reference resistor R2_ref may be electrically connected to one end of the adjustment resistor Rn included in the second resistor unit 122n and the switch SW_n included in the second resistor unit 122n.

According to an embodiment, the other end of the second resistor unit 122n may be electrically connected to one end of a second resistor unit 122n-1. That is, the other end of the adjustment resistor Rn included in the second resistor unit 122n may be electrically connected to an end of an adjustment resistor Rn-1 included in the second resistor unit 122n-1 and an end of a switch SW_n-1 included in the second resistor unit 122n-1.

Likewise, according to an embodiment, the other end of the second resistor unit 122b may be electrically connected to one end of the second resistor unit 122a. That is, the other end of the adjustment resistor Rb included in the second resistor unit 122b may be electrically connected to an end of the adjustment resistor Ra included in the second resistor unit 122a and an end of the switch SW_a included in the second resistor unit 122a.

According to an embodiment, the other end of the adjustment resistor Ra included in the second resistor unit 122a may be electrically connected to the other ends of the switches SW_a, SW_b, SW_n-1, and SW_n included in each of the plurality of second resistor units 122a, 122b, 122n-1, and 122n, through the second node N2. Herein, the second node N2 may be electrically connected to the ground terminal shown in FIG. 3.

According to an embodiment, the magnitude of the equivalent resistance of the driving unit 120 may be determined based on connection states of the plurality of switches SW_a, SW_b, and SW_n included in each of the plurality of second resistor units 122a, 122b, 122n-1, and 122n. For example, the equivalent resistance of the driving unit 120 may correspond to (R2_ref + Ra + Rb + ... + Rn-1 + Rn) when the plurality of switches SW_a, SW_b, and SW_n are all in the open state, the equivalent resistance of the driving unit 120 may correspond to (R2_ref + Rb + ... + Rn-1 + Rn) when among the plurality of switches SW_a, SW_b, SW_n-1, and SW_n, the switch SW_a is in the short-circuit state and the switches SW_b, SW_n-1, and SW_n are in the open state, the equivalent resistance of the driving unit 120 may correspond to (R2_ref + ... + Rn-1 + Rn) when among the plurality of switches SW_a, SW_b, SW_n-1, and SW_n, the switches SW_a and SW_b are in the short-circuit state and the switches SW_n-1 and SW_n are in the open state, the equivalent resistance of the driving unit 120 may correspond to (R2_ref + Rn) when among the plurality of switches SW_a, SW_b, SW_n-1, and SW_n, the switches SW_a, SW_b, and SW_n-1 are in the short-circuit state and the switch SW_n is in the open state, and the equivalent resistance of the driving unit 120 may correspond to R2_ref when the plurality of switches SW_a, SW_b, SW_n-1, and SW_n are all in the short-circuit state.

According to an embodiment, the magnitude of the second reference resistance R2_ref may correspond to a minimum value of the magnitude of the equivalent resistance of the driving unit 120. This is because when the plurality of switches SW_a, SW_b, and SW_n enter the short-circuit state, the magnitude of the equivalent resistance of the driving unit 120 may decrease.

According to an embodiment, the control unit 130 (see FIG. 1) may control electric connection of the plurality of switches SW_a, SW_b, and SW_n in the open state to reduce the magnitude of the equivalent resistance of the driving unit 120, thereby increasing the magnitude of the current flowing through the photo-diode D1 (see FIG. 3). In other words, the control unit 130 may short-circuit the plurality of switches SW_a, SW_b, and SW_n in the open state to reduce the magnitude of the equivalent resistance of the driving unit 120, thereby increasing the strength of the optical signal generated by the optical signal generation unit 110 (see FIG. 1).

According to an embodiment, the magnitudes of the plurality of adjustment resistors Ra, Rb, Rn-1, and Rn included in each of the plurality of first resistor units 122a, 122b, 122n-1, and 122n may be equal to or different from each other.

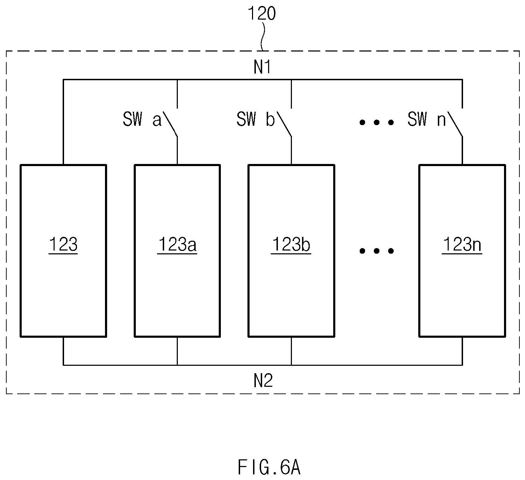

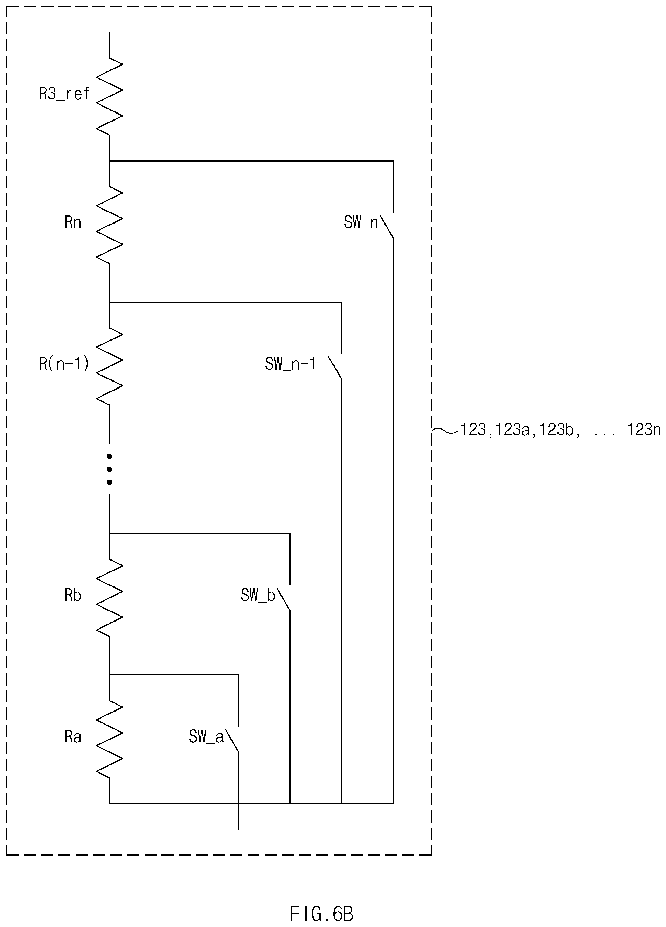

FIGS. 6A and 6B are views for describing a driving unit according to another embodiment disclosed herein.

Referring back to FIG. 6A, the driving unit 120 may include a reference resistor unit 123 and a plurality of adjustment resistor units 123a, 123b, and 123n connected in parallel to the reference resistor unit 123. While the driving unit 120 is illustrated as n adjustment resistor units (n is an integer of at least 2) in FIG. 6A, the present disclosure is not limited to this example.

According to an embodiment, each of the reference resistor unit 123 and the plurality of adjustment resistor units 123a, 123b, and 123n may include a plurality of adjustment resistors and a plurality of switches electrically connected to the plurality of adjustment resistors. The reference resistor unit 123 and each of the plurality of adjustment resistor units 123a, 123b, and 123n will be described with reference to FIG. 6B.

According to an embodiment, an end of the reference resistor unit 123 and an end of each of the plurality of adjustment resistor units 123a, 123b, and 123n may be electrically connected to each other through the first node N1. Herein, the first node N1 may be electrically connected to a cathode terminal of the photo-diode D1 (see FIG. 3).

According to an embodiment, the other end of the reference resistor unit 123 and the other end of each of the plurality of adjustment resistor units 123a, 123b, and 123n may be electrically connected to each other through the second node N2. Herein, the second node N2 may be electrically connected to the ground terminal shown in FIG. 3.

Referring to FIG. 6B, a detailed structure of the reference resistor unit 123 and the plurality of adjustment resistor units 123a, 123b, and 123n is shown.

According to an embodiment, each of the reference resistor unit 123 and the plurality of adjustment resistor units 123a, 123b, 123n-1, and 123n may include a third reference resistor R3_ref, a plurality of adjustment resistors Ra, Rb, Rn-1, and Rn connected in series to the third reference resistor R3_ref, and a plurality of switches connected in parallel to each of the plurality of adjustment resistors Ra, Rb, Rn-1, and Rn. While it is shown in FIG. 6B that each of the reference resistor unit 123 and the plurality of adjustment resistor units 123a, 123b, 123n-1, and 123n equally includes n adjustment resistors (n is an integer of at least 2) and n switches, the present disclosure is not limited to this example, and the number of adjustment resistors and the number of switches included in each of the reference resistor unit 123 and the plurality of adjustment resistor units 123a, 123b, 123n-1, and 123n may be differ from each other.

According to an embodiment, an end of each third reference resistor R3_ref included in each of the reference resistor unit 123 and the plurality of adjustment resistor units 123a, 123b, 123n-1, and 123n may be electrically connected to a cathode terminal of the photo-diode D1 (see FIG. 3). Herein, magnitudes of the third reference resistors R3_ref included in the reference resistor unit 123 and the plurality of adjustment resistor units 123a, 123b, 123n-1, and 123n may be the same as or different from each other.

According to an embodiment, a structure of each of the reference resistor unit 123 and the plurality of adjustment resistor units 123a, 123b, 123n-1, and 123n may be the same as the driving unit 120 shown in FIG. 5. A description redundant to the description of FIG. 5 will be omitted.

According to an embodiment, the adjustment resistor Ra and the plurality of switches SW_a, SW_b, SW_n-1, and SW_n included in each of the reference resistor unit 123 and the plurality of adjustment resistor units 123a, 123b, 123n-1, and 123n may be electrically connected through the second node N2. Herein, the second node N2 may be electrically connected to the ground terminal shown in FIG. 3.

According to an embodiment, the magnitudes of the plurality of adjustment resistors Ra, Rb, Rn-1, and Rn included in each of the reference resistor unit 123 and the plurality of adjustment resistor units 123a, 123b, 123n-1, and 123n may be equal to or different from each other.

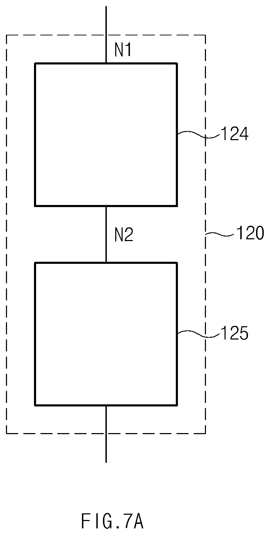

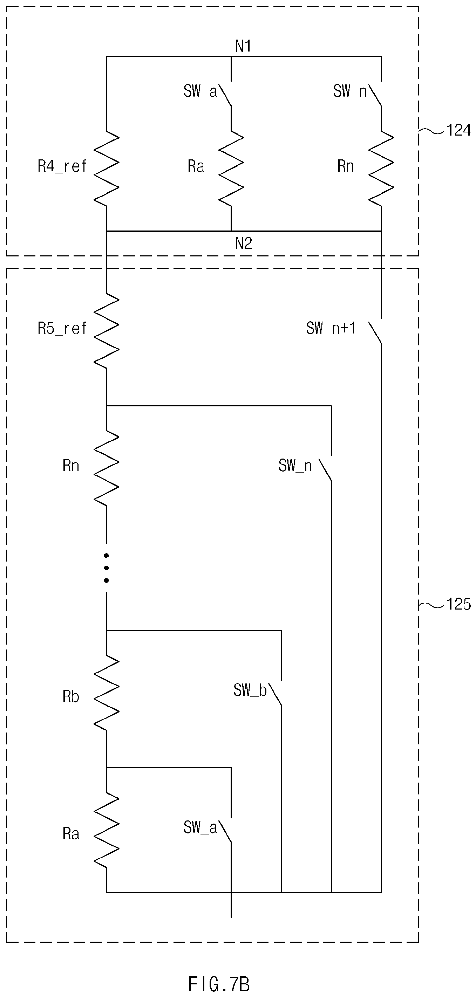

FIGS. 7A and 7B are views for describing a driving unit according to another embodiment disclosed herein.

Referring to FIG. 7A, the driving unit 120 may include a fourth resistor unit 124 and a fifth resistor unit 125 connected in series to each other. An end of the fourth resistor unit 124 may be electrically connected to the first node N1, and the other end of the fourth resistor unit 124 and an end of the fifth resistor unit 125 may be electrically connected to each other through the second node N2. The first node N1 may be electrically connected to the cathode terminal of the photo-diode D1 (see FIG. 3), and the other end of the fifth resistor unit 125 may be electrically connected to the ground terminal shown in FIG. 3.

Referring to FIG. 7B, detailed structures of the fourth resistor unit 124 and the fifth resistor unit 125 connected in series to the fourth resistor unit 124 are shown.

The fourth resistor unit 124 may include a fourth reference resistor R4_ref, a plurality of adjustment resistors Ra, Rb, and Rn connected in parallel to the fourth reference resistor R4_ref, and a plurality of switches SW_a, SW_b, and SW_n connected in series to the plurality of adjustment resistors Ra, Rb, and Rn. An end of the fourth reference resistor R4_ref and ends of the plurality of switches SW_a, SW_b, and SW_n may be electrically connected through the first node N1.

Similarly, the other end of the fourth reference resistor R4_ref and the other ends of the plurality of adjustment resistors Ra, Rb, and Rn may be electrically connected through the second node N2.

According to an embodiment, a structure of the fourth resistor unit 124 may be the same as the driving unit 120 shown in FIG. 4. A description redundant to the description of FIG. 4 will be omitted.

The fifth resistor unit 125 may include a fifth reference resistor R5_ref, a plurality of adjustment resistors Ra, Rb, and Rn connected in series to the fifth reference resistor R5_ref, and a plurality of switches SW_a, SW_b, SW_n, and SW_n+1 connected in parallel to each of the fifth reference resistor R5_ref and the plurality of adjustment resistors Ra, Rb, and Rn.

According to an embodiment, an end of the fifth reference resistor R5_ref and an end of the switch SW_n+1 may be electrically connected to each other through the second node N2.

According to an embodiment, the adjustment resistor Rn and the switch SW_n connected in parallel to the adjustment resistor Rn may be electrically connected to the other end of the fifth reference resistor R5_ref.

Likewise, an end of the adjustment resistor Ra and the switch SW_a connected in parallel to the adjustment resistor Ra may be included in the other end of the adjustment resistor Rb.

According to an embodiment, the other end of the adjustment resistor Ra and the other ends of the plurality of switches SW_a, SW_b, SW_n, and SW_n+1 may be electrically connected to the ground terminal shown in FIG. 3.

As described above, the driving unit 120 (see FIG. 1) may include a reference resistor, a plurality of adjustment resistors, and a plurality of switches. The battery management apparatus 100 (see FIG. 1) according to an embodiment disclosed herein may adjust the strength of an optical signal by controlling electric connection of the switches included in the driving unit 120 even when an operating voltage at a specific level is applied. Moreover, according to an embodiment disclosed herein, the number, magnitudes, etc., of adjustment resistors may be set variously, thereby precisely adjusting the strength of the optical signal.

So far, all components constituting the embodiment have been described as being combined or combined to operate as one, but it is not necessarily limited to this embodiment, and within the scope of the purpose, all components may be selectively combined with one or more components to operate. Moreover, terms such as "include", "constitute" or "have" described above may mean that the corresponding component may be inherent unless otherwise stated, and thus should be construed as further including other components rather than excluding other components.

The above description is merely illustrative of the technical idea of the present disclosure, and various modifications and variations will be possible without departing from the essential characteristics of embodiments of the present disclosure by those of ordinary skill in the art to which the embodiments disclosed herein pertains.

Therefore, the embodiments disclosed herein are intended for description rather than limitation of the technical spirit of the embodiments disclosed herein and the scope of the technical spirit of the present disclosure is not limited by these embodiments disclosed herein. The protection scope of the technical spirit disclosed herein should be interpreted by the following claims, and all technical spirits within the same range should be understood to be included in the range of this document.

## Claims

1. A battery management apparatus comprising:
an optical signal generation unit configured to generate an optical signal for performing optical communication with another battery management apparatus based on a preset operating voltage applied from outside;
a driving unit comprising a plurality of resistor units, each of which comprises a resistor and a switch electrically connected to the resistor, the plurality of resistor units being selectively connected to the optical signal generation unit; and
a control unit configured to control an operation of the plurality of switches to control selective connection between the optical signal generation unit and the plurality of resistor units.

2. The battery management apparatus of claim 1, wherein the optical signal generation unit comprises a light-emitting diode comprising an anode terminal through which the operating voltage is applied and a cathode terminal electrically connected to an end of the driving unit, and
the other end of the driving unit is electrically connected to a ground terminal.

3. The battery management apparatus of claim 2, wherein the driving unit comprises a first reference resistor and a plurality of first resistor units connected in parallel to the first reference resistor, and
each of the plurality of first resistor units comprises an adjustment resistor and a switch connected in series to the adjustment resistor.

4. The battery management apparatus of claim 3, wherein an end of the first reference resistor and an end of a switch included in each of the plurality of first resistor units are electrically connected to the cathode terminal,
an end of each adjustment resistor included in each of the plurality of first resistor units is electrically connected to the other end of each switch, and
the other end of the first reference resistor and the other end of each adjustment resistor included in each of the plurality of first resistor units are electrically connected to the ground terminal.

5. The battery management apparatus of claim 3, wherein a maximum value of a magnitude of an equivalent resistance of the driving unit corresponds to a value of the first reference resistor.

6. The battery management apparatus of claim 3, wherein magnitudes of adjustment resistors included in each of the plurality of first resistor units are different from each other.

7. The battery management apparatus of claim 2, wherein the driving unit comprises a second reference resistor and a plurality of second resistor units connected in series to the second reference resistor, and
each of the plurality of second resistor units comprises an adjustment resistor and a switch connected in parallel to the adjustment resistor.

8. The battery management apparatus of claim 7, wherein the adjustment resistors included in each of the plurality of second resistor units are connected in series, and an end of each switch is connected in parallel to the second reference resistor, the adjustment resistor, and each terminal connecting each adjustment resistor, and
the other end of each switch is electrically connected to the ground terminal.

9. The battery management apparatus of claim 7, wherein a minimum value of the magnitude of the equivalent resistance of the driving unit corresponds to a value of the second reference resistor.

10. The battery management apparatus of claim 7, wherein magnitudes of adjustment resistors included in each of the plurality of second resistor units are different from each other.

11. The battery management apparatus of claim 2, wherein the driving unit comprises a reference resistor unit and a plurality of adjustment resistor units connected in parallel to the reference resistor, and
each of the reference resistor unit and the plurality of adjustment resistor units comprises a third reference resistor, a plurality of adjustment resistors connected in series to the third reference resistor, and a plurality of switches connected in parallel to each of the plurality of adjustment resistors.

12. The battery management apparatus of claim 11, wherein each of the third reference resistor and the plurality of adjustment resistors included in each of the reference resistor unit and the plurality of adjustment resistor units is connected in series, and an end of each switch is connected in parallel to the third reference resistor, the adjustment resistor, and a terminal connecting each adjustment resistor, and
the other end of each switch is electrically connected to the ground terminal.

13. The battery management apparatus of claim 2, wherein the driving unit comprises:
a fourth resistor unit comprising a fourth reference resistor having an end electrically connected to a first node that is the cathode terminal, a plurality of switches, each having an end electrically connected to the first node, and a plurality of fourth adjustment resistors connected in series to the other end of each of the plurality of switches; and
a fifth resistor unit comprising a fifth reference resistor connected in series to a second node corresponding to the other ends of the fourth reference resistor and the plurality of adjustment resistors, a plurality of fifth adjustment resistors connected in series to the fifth reference resistor, and a plurality of switches respectively connected among the second node, a terminal among the plurality of fifth adjustment resistors, and the ground terminal.

14. A battery management apparatus comprising:
an optical signal generation unit configured to generate an optical signal for performing optical communication with another battery management apparatus based on a preset operating voltage applied from outside;
a driving unit comprising a plurality of resistors and a plurality of switches electrically connected respectively to the plurality of resistors; and
a control unit configured to control operations of the plurality of switches such that a magnitude of current flowing through the driving unit reaches a magnitude of target current.

15. The battery management apparatus of claim 14, wherein the optical signal generation unit comprises a light-emitting diode comprising an anode terminal through which the operating voltage is applied and a cathode terminal electrically connected to an end of the driving unit.

16. The battery management apparatus of claim 15, wherein the control unit is further configured to increase the magnitude of the target current when communication is not performed based on the other battery management apparatus and the optical signal.

17. The battery management apparatus of claim 15, wherein the control unit is further configured to increase the magnitude of the target current based on data related to a magnitude of received current flowing through the other battery management apparatus.
